# DEMANDE DE BREVET EUROPEEN

(11) **EP 0 939 298 A1**
(43) Date de publication de la demande: **01.09.1999**
(21) Numéro de dépôt: 99400473.7
(22) Date de dépôt: 26.02.1999
(51) Int. Cl.: G01C 21/22

(54) **Procédé d'enregistrement de données géographiques pour systéme de navigation**

(30) Priorité: 27.02.1998 FR 9802430
(71) Demandeur: MLR ELECTRONIQUE, F-44330 Vallet (FR)
(72) Inventeur: Maqaire, Jean-Pierre Albert, 44000 Nantes (FR)
(74) Mandataire: Berger, Helmut

(57) **Abrégé**

L'invention concerne un procédé d'enregistrement dans une base de données notamment d'un système de navigation et de positionnement de données géographiques de lieux géographiques choisis dans une zone géographique prédéterminée.

Le procédé est caractérisé en ce que l'on choisit deux points sur une carte géographique de ladite zone, définit ces points par leurs coordonnées géographiques, telles que leur longitude et leur latitude, et par leurs coordonnées de position sur la carte, on établit la corrélation entre les coordonnées géographiques et de position, définit les points à enregistrer par leurs coordonnées de position, calcule pour ces coordonnées de position, d'après ladite corrélation, les coordonnées géographiques, et inscrit les coordonnées géographiques ainsi calculées dans ladite base de données.

L'invention est utilisable par exemple par des randonneurs.

## Description

L'invention concerne un procédé d'enregistrement dans une mémoire notamment d'un système de navigation et de positionnement de données géographiques de lieux géographiques tels que les points d'un itinéraire dans une zone géographique prédéterminée, et un agencement pour la mise en oeuvre de ce procédé.

Les systèmes de navigation et de positionnement, grâce à leurs bases numériques de données géographiques d'une zone géographique donnée sont conçus pour guider leurs utilisateurs le long d'un itinéraire préétabli et pour vérifier l'exactitude de leurs positions lors d'un déplacement.

On connaît déjà des procédés et agencements du type défini plus haut, qui permettent à l'utilisateur d'ajouter ses propres données personnelles, telles que des casiers ou zones de pêche pour un marin, des restaurants intéressants pour un automobiliste, des monuments au bord d'un itinéraire préétabli, des zones à champignons ou fleurs pour un randonneur.

Les procédés et agencements connus sont fondés sur l'emploi d'une table à digitaliser ou d'une carte électronique enregistrée dans un appareil, sur laquelle l'utilisateur va pointer électroniquement les points qu'il souhaite définir.

Or, ces procédés et agencements connus présentent l'inconvénient majeur que l'utilisation d'une table à digitaliser ou d'une carte électronique sont encombrantes et lourdes et donc difficilement utilisables pour beaucoup d'utilisations de loisirs, où il est impératif de disposer d'un équipement le plus léger possible et pour des utilisations professionnelles nécessitant un encombrement minimum.

La présente invention a pour but de proposer un procédé et un agencement du type défini plus haut, qui pallie les inconvénients de l'état de la technique.

Pour atteindre ce but, le procédé selon l'invention est caractérisé en ce que l'on choisit deux points sur une carte géographique de la zone géographique dans laquelle des points correspondant à des lieux géographiques doivent être indiqués, définit ces points par leurs coordonnées géographiques, telles que leur longitude et leur latitude, et par leurs coordonnées de position sur la carte, que l'on établit la corrélation entre les coordonnées géographiques et de position, définit les points à enregistrer par leurs coordonnées de position, calcule à partir de ces coordonnées de position les coordonnées géographiques, d'après ladite corrélation, et inscrit les coordonnées géographiques calculées dans ladite mémoire.

L'agencement pour la mise en oeuvre du procédé est caractérisé en ce qu'il comprend un dispositif d'établissement d'un système de coordonnées polaires sur la carte géographique et d'établissement des coordonnées polaires des points se trouvant sur la carte dans ce système, un enregistreur pour l'inscription par l'utilisateur de coordonnées géographiques et de réception de coordonnées polaires et des moyens de calcul adaptés pour calculer pour des coordonnées polaires les coordonnées géographiques.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue schématique en perspective d'un agencement selon l'invention ; et
- la figure 2 montre l'agencement selon la figure 1 à l'état replié.
- La figure 3 est une vue en coupe le long de la ligne III-III de la figure 4 d'un deuxième mode de réalisation selon l'invention, et
- La figure 4 est une vue en coupe le long de la ligneIV-IV de la figure 3.

L'agencement selon l'invention, qui permet à son utilisateur d'inscrire dans une base numérique de données géographiques des données supplémentaires, pour personnaliser le contenu des bases comprend essentiellement une règle pivotante électronique 1 comportant un élément de règle 2 monté sur une base circulaire 3, pivotant autour d'un axe central 4 et un dispositif de visée 6 réalisé sous forme d'un curseur déplaçable axialement sur l'élément de règle 2. Le point de visée 7 du curseur de visée apparaît au centre d'une fenêtre 8 et l'élément de règle 2 comporte une fente longitudinale 9 pour que, lorsque la règle est placée sur une carte géographique, celle-ci soit visible à travers la fenêtre 8, dans toute position axiale du curseur sur l'élément de règle 2. La base 3 comporte autour de l'axe de rotation 4 également une fenêtre indiquée en 10 pour que la carte soit visible à travers cette fenêtre.

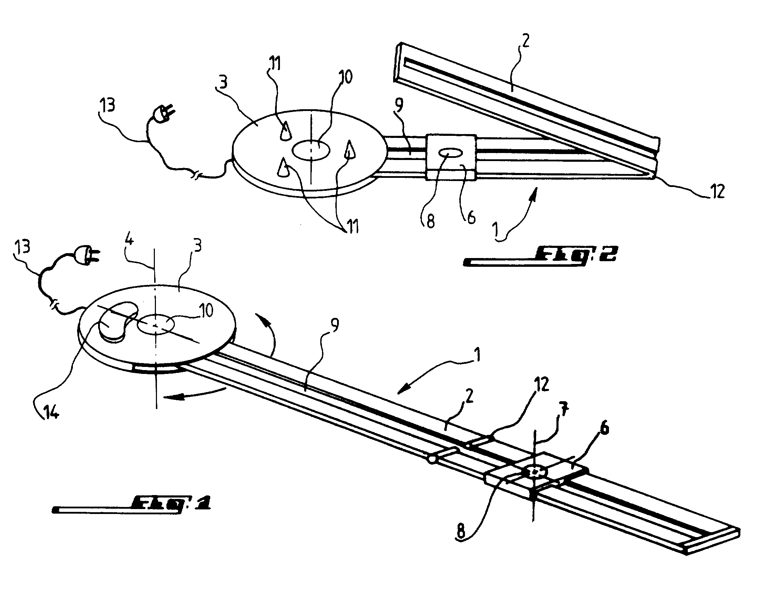

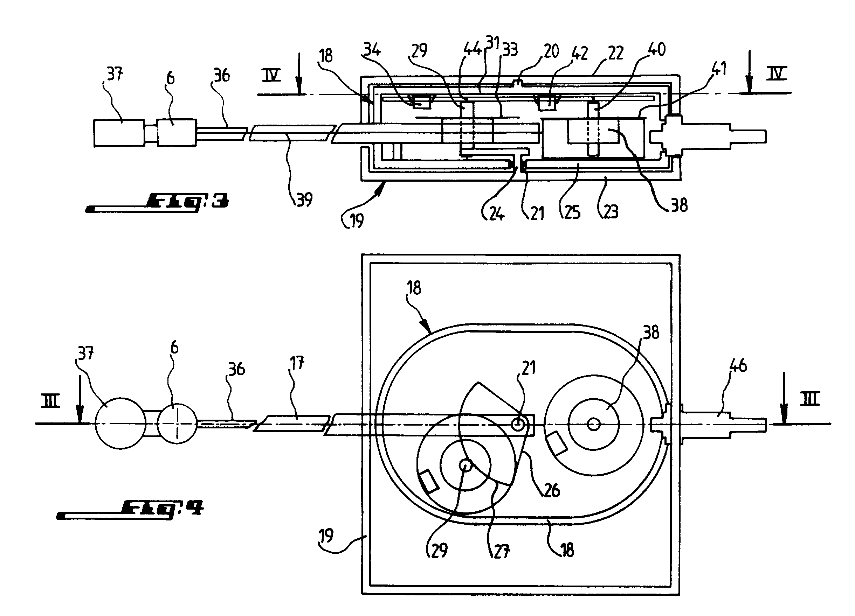

Comme le montre la figure 2, la face inférieure de la base 3 porte des pointes 11 qui permettent l'immobilisation de la règle pivotante 1 sur la carte. Cette figure montre en outre que l'élément de règle 2 peut être replié autour d'une charnière 12 pour réduire son encombrement. Bien entendu la règle pourrait être réalisée de façon à être extensible.

La règle pivotante 1 comporte encore un dispositif électronique qui permet la mesure de la distance du point de visée mobile 7 de l'axe de pivotement 4 et l'angle de pivotement de l'élément de règle. Ce dispositif est ainsi en mesure de définir des points qui apparaissent dans la visée 7 sous forme de coordonnées polaires dans un système de coordonnées polaires dont l'origine est située dans l'axe de pivotement 4. Le dispositif électronique mesure l'angle et la distance des points de visée dans ce système.

La règle pivotante électronique 1 s'utilise avantageusement avec un appareil de navigation et de positionnement (non représenté) dans la base numérique de données géographiques duquel seront inscrits les points géographiques choisis par l'utilisateur. L'enregistreur de données de cet appareil 1 sert de moyen d'interface de dialogue entre l'appareil de navigation et la règle pivotante électronique grâce à son clavier alphanumérique et son écran. A cette fin la règle est pourvue d'un moyen de liaison avec l'enregistreur, qui pourrait être formé par un cordon électrique 13, comme dans l'exemple représenté, une liaison infrarouge ou une liaison radio. Bien entendu l'agencement selon l'invention comporte encore un logiciel de gestion de l'interface utilisateur et de dialogue entre la règle et l'enregistreur.

La base circulaire 3 de la règle 1 est encore pourvu d'un organe de transfert 14 à l'enregistreur des coordonnées polaires mesurée. Dans l'exemple représenté, cet organe est formé par un bouton poussoir.

On décrira ci-après le fonctionnement et l'utilisation de l'agencement selon l'invention.

Si l'utilisateur souhaite personnaliser la base de données géographiques de son appareil de navigation et de positionnement, il pose la carte géographique de la région géographique en question sur une surface plane ou quasi-plane, telle qu'une table, mur, sol ou plancher et place la règle pivotante électronique 1 selon l'invention sur la carte. La règle sera immobilisée sur celle-ci à l'aide des pointes de fixation 11.

Avant de procéder à l'inscription dans la base numérique des points géographiques souhaités, l'utilisateur doit tout d'abord inscrire dans l'enregistreur, à l'aide du clavier alphanumérique, les coordonnées géographiques, c'est-à-dire la longitude, la latitude de deux points de la carte. Il rentrera les coordonnées du point se trouvant dans l'axe de pivotement 4 et constituant l'origine du système polaire et celles d'un point quelconque éloigné de l'axe de pivotement, par exemple un point situé par rapport à l'axe de l'autre côté de la zone de données à enregistrer. A l'aide de la règle 1, en positionnant sur ce deuxième point le curseur 6, on établit également ses coordonnées de position sur la carte. Le bouton d'enregistrement permet de transférer ces coordonnées à l'enregistreur de façon que le logiciel puisse établir la corrélation entre les coordonnées géographiques et de position des deux points de référence en établissant l'échelle de la carte et l'angle polaire initial par rapport au Nord géographique.

Puis l'utilisateur peut entrer automatiquement tout point, trace, ligne particulière, zone particulière de sa carte qu'il souhaite enregistrer, en plaçant le curseur de visée 6 sur les points souhaités et en commandant le transfert des coordonnées polaires de ces points à l'enregistreur, par actionnement du bouton d'enregistrement. Grâce à la corrélation établie auparavant, le logiciel est en mesure de convertir alors les coordonnées polaires en coordonnées géographiques qui seront ensuite enregistrées dans la base de données numériques de l'appareil de navigation et de positionnement.

Les figures 3 et 4 montrent un autre mode de réalisation de l'agencement selon l'invention. Dans ce mode de réalisation, la règle électronique est formée par une tige télescopique 17 montée fixe à une extrémité dans un boitier plat 18, d'une forme ovale et lui-même monté rotatif dans un carter extérieur 19 par l'intermédiaire de pivots supérieur et inférieur respectivement indiqués en 20 et 21.Le carter est adapté pour être immobilisé sur une carte géographique, par exemple à l'aide de pointes (non représentés) comme les pointes 11 du premier mode de réalisation. Le pivot supérieur 20 est formé par un ergot faisant saillie de la face supérieure 31 du boitier et s'engageant dans un trou approprié pratiqué dans la face interne de la paroi supérieure 22 du carter extérieur 19. Le pivot inférieur 21 fait saillie de la face interne de la paroi inférieure 23 du carter 19, s'étend à travers une lumière 24 au centre de la paroi inférieure 25 du boitier 18 et porte à son extrémité libre un secteur d'engrenage 26 d'une étendue angulaire de 120°. Ce secteur se trouve donc à l'intérieur du boitier 18. La denture sur la face arquée 27 du secteur 26 engrène un pignon 29 qui est monté librement rotatif dans le boitier 18 en étant supporté par les parois inférieure 25 et supérieure 31 du boitier. Le pignon 29 porte un disque 33 qui est pourvu à sa périphérie des éléments d'échelle de mesure permettant à un capteur de mesure 34 fixé sous la face interne de la paroi supérieure 31 du boitier 18 de mesurer l'angle de rotation du boitier et ainsi de la tige télescopique 17. La coopération du secteur 26 et du pignon 27 permet de mesurer avec une très grande précision les positions angulaires de la tige télescopique 17 grâce à l'effet multiplicateur que ces pièces produisent.

Cette tige télescopique comporte, fixé au bout libre de l'élément télescopique d'extrémité 36, un organe de visée formant le curseur 6 du premier mode de réalisation, qui est déplaçable dans l'axe de la tige. Cette extrémité est encore pourvue d'un organe formant poignée 37 pour la manipulation de la tige. La longueur de la tige est mesurée à l'aide d'un câble 39 dont une extrémité est fixée à l'élément télescopique d'extrémité 36 tandis que l'autre extrémité est enroulée autour d'un tambour 38 monté rotatif dont le boitier 18 par l'intermédiaire d'un l'axe 40, à l'encontre d'un ressort de rappel. Le tambour est solidaire en rotation d'un disque 41 qui comporte à sa périphérie des éléments formant une échelle et qui permettent la mesure de l'angle de rotation du disque et ainsi du tambour à l'aide d'un capteur optique 42 monté sur la face interne de la paroi supérieure 22 du boitier 18, au niveau de la périphérie du disque 41. L'angle de rotation mesuré est représentatif de la longueur de la tige. Sur la face inférieure de la paroi supérieure est également montée une plaque à circuits inprimés 44 qui porte les composants électroniques pour le traitement des données fournies par les deux capteurs en vue de la détermination des coordonnées polaires des différents points se trouvant sur la carte et dont on souhaite inscrire dans la base de données les coordonnées géographiques. Les bornes de sortie des circuits électriques de la carte sont reliés électriquement à un câble extérieur par l'intermédiaire d'un connecteur 46 monté dans la paroi périphérique du carter extérieur 19.

## Revendications

1. Procédé d'enregistrement dans une base de données notamment d'un système de navigation et de positionnement de données géographiques de lieux géographiques choisis dans une zone géographique prédéterminée, caractérisé en ce que l'on choisit deux points sur une carte géographique de ladite zone, définit ces points par leurs coordonnées géographiques, telles que leur longitude et leur latitude, et par leurs coordonnées de position sur la carte, on établit la corrélation entre les coordonnées géographiques et de position, définit les points à enregistrer par leurs coordonnées de position, calcule pour ces coordonnées de position, d'après ladite corrélation, les coordonnées géographiques, et inscrit les coordonnées géographiques ainsi calculées dans ladite base de données.

2. Agencement selon la revendication 1, caractérisé en ce qu'il comprend un dispositif d'établissement d'un système de coordonnées polaires sur la carte géographique et d'établissement des coordonnées polaires des points se trouvant sur la carte dans ce système, un enregistreur pour l'inscription par l'utilisateur des coordonnées géographique et de réception des coordonnées polaires et des moyens de calcul adaptés pour calculer pour des coordonnées polaires les coordonnées géographiques de ces points.

3. Agencement selon la revendication 2, caractérisé en ce que le dispositif d'établissement d'un système de coordonnées polaires et d'établissement des coordonnées polaires de points se trouvant sur la carte, dans ce système, est formé par une règle pivotante électronique (1) comprenant un élément de règle (2, 17) monté pivotant autour d'une base (3, 19) immobilisable sur la carte et dont l'axe de pivotement définit l'origine du système de coordonnées, un curseur de données (6) axialement déplaçable sur l'élément de règle ou dans l'axe de celui-ci et un dispositif de mesure des coordonnées polaires des points se trouvant dans la visée (7) du curseur (6).

4. Agencement selon la revendication 3, caractérisé en ce que le dispositif de mesure des coordonées polaires est un dispositif de mesure de l'angle de la règle (2) et de la distance du point de visée (7) du curseur (6) de l'axe de rotation de la règle.

5. Agencement selon l'une des revendications 3 ou 4, caractérisé en ce que la règle (2) comporte au moins deux parties articulées l'une à l'autre autour d'un axe de pivotement (12) perpendiculaire à la direction longitudinale de la règle, les deux parties étant repliables l'une sur l'autre.

6. Agencement selon l'une des revendications 3 ou 4, caractérisé en ce que la règle est extensible pour faire varier sa longueur.

7. Agencement selon l'une des revendications 3 à 6, caractérisé en ce qu'il comporte des moyens d'inscription des données géographiques des points de référence dans un dispositif enregistreur et des moyens de transfert (14) des données géographiques mesurées par la règle dans le dispositif enregistreur.

8. Agencement selon la revendication 7, caractérisé en ce que les moyens de transfert sont des moyens actionnables par l'utilisateur de la règle, tel qu'un bouton poussoir monté sur la base (3, 14) de la règle pivotante électronique (1).

9. Agencement selon la revendication 3 ou 8, caractérisé en ce qu'il comporte un logiciel de onversion des coordonnées polaires mesurées en coordonnées géographiques.

10. Agencement selon l'une des revendications 3 à 9, caractérisé en ce que la règle électronique (1) comporte des moyens de liaison (13) au dispositif enregistreur tel qu'un câble, une liaison infrarouge ou une liaison radio.

11. Agencement selon l'une des revendications 1 à 4 et 6 à 10, caractérisé en ce que la tige électronique est une tige télescopique (17) portant à son extrémité une élément de visée 6 formant curseur de visée et dont la longueur est mesurable à l'aide d'un câble (39) solidaire de l'élément de visée et enroulé autour d'un tambour (38) dont l'angle de rotation est mesuré à l'aide d'un capteur de mesure.

12. Agencement selon la revendication 11, caractérisé en ce qu'il comporte un dispositif de mesure de l'angle de rotation de la tige télescopique, qui comporte un capteur de mesure (34) de l'angle de rotation et un engrenage multiplicateur(26-29) pour augmenter la précision de mesure.

13. Agencement selon la revendication 12, caractérisé en ce que le tambour (38), l'engrenage (26-29) et les capteurs (42, 34) sont enfermés dans un boitier (18) dont la tige télescopique (17) est solidaire et qui est montée rotatif dans un carter extérieur (19) immobilisable sur la carte géographique.

14. Système de navigation et de positionnement de données géographiques de lieux géographiques, tel que des points d'un itinéraire dans une zone géographique prédéterminée, comprennent un appareil de navigation et de positionnement pourvu d'une base de données géographiques et d'un dispositif d'inscription de données, caractérisé en ce qu'il comporte en outre un agencement selon l'une des revendications 2 à 13 pour l'inscription de points géographiques par l'utilisateur dans la base de données et une interface de dialogue entre ledit appareil et la règle électronique (1), comportant l'enregistreur et le logiciel de conversion précités, le dispositif d'inscription de données de l'appareil constituant les moyens d'inscription des données géographiques des points de référence précités.

15. Procédé d'utilisation du système selon la revendication 14 pour l'inscription d'un point géographique se trouvant sur une carte géographique dans la base de données précitée de l'appareil de navigation, caractérisé en ce que l'on pose la carte géographique comportant le point géographique à inscrire sur une surface au moins quasi-plane, tel qu'une table, mur, sol ou plancher, place la règle pivotante électronique (1) sur la carte, inscrit à l'aide du dispositif d'inscription les données géographiques de deux points de référence se trouvant sur ladite carte, établit également les coordonnées de position de ces deux points de référence à l'aide de la règle électronique (1) en plaçant le point de visée du curseur sur chacun des points, commande le transfert des coordonnées de position mesurées par la règle dans le dispositif enregistreur, inscrit les coordonnées de position du point à inscrire dans l'enregistreur à l'aide de la règle et par actionnement de l'organe de transfert et amène le logiciel à établir les coordonnées géographiques de ce point et à les inscrire dans la base de données.
